# EUROPEAN PATENT SPECIFICATION

(11) **EP 1 288 089 B1**
(45) Date of publication and mention of the grant of the patent: **29.03.2006**
(21) Application number: 02019363.7
(22) Date of filing: 29.08.2002
(51) Int. Cl.: B60S 1/38, B29C 47/00

(54) **Wiper blade and a method for the manufacturing thereof**
Wischerblatt und Verfahren zur dessen Herstellung
Balai d'essuie-glace et méthode pour sa fabrication

(30) Priority: 29.08.2001 SE 0102863
(43) Date of publication of application: 05.03.2003
(60) Divisional application: 05020372.8
(73) Proprietor: National Gummi AB, 30265 Halmstad (SE)
(72) Inventor: Dahlbom, Bo, 30265 Halmstad (SE)
(74) Representative: Petri, Stellan

(56) References cited:
- EP-A- 1 059 213
- GB-A- 760 378
- US-A- 4 638 525
- US-A- 5 716 699
- US-A- 5 802 662

## Description

### Technical Field

The present invention relates to a wiper blade made of rubber for cleaning a pane of glass, for example a wind screen or the like, comprising a rubber profile having an edge for abutting the pane.

In addition, the present invention relates to a method for the manufacturing of a wiper blade according to the above-mentioned type.

### Background of the Invention

The manufacturing of wiper blades is generally performed by injection moulding rubber requiring a high-polished tool, especially produced for this purpose, which gives smooth components or products. A drawback of those existing wiper blades when used in windscreen wipers is that they present a high friction against the windscreen, which may lead to sound or squeaking. Another drawback is that they often have a low wear resistance and are worn out in short time resulting in that they have to be changed frequently, causing the car owner an additional cost. In wintertime there is also a problem regarding wiper blades frozen to the windscreen, when using commonly existing rubber qualities.

Extrusion of rubber is a well-known technology for the manufacturing of sealings or sealing strips. The manufacturing may be continuous, allowing a more cost-effective production for some products in comparison with manufacturing by injection moulding, and thus the result is less expensive products. Experiments have been made regarding production of wiper blades by means of extrusion. However, they have showed that it is difficult to get the edge or the surface abutting the windscreen sufficiently even or flat to smoothly sweep away water, snow or other precipitation or to satisfactory clean the windscreen.

Other experiments have been made with mixing powder of polytetrafluoro ethylene into the rubber to get an edge or a lip against the windscreen, which is smooth and hard and which has a low friction against the windscreen, however, this experiment did not reach the expected results regarding for example cleaning and high durability.

EP1059213 discloses a wiper blade of rubber for automobiles which is serviceable on a glass surface having a water-repellent coating film without destroying the coating film for a long time. The disclosed wiper blade has a lip portion made from a silicone rubber and which is provided on both side surfaces with a wiping layer coming into contact with the glass. However, the silicone rubber lip portion does not contact the glass surface itself as the wiping layers are formed as protrusions from the blade stem, i.e. they extend beyond an end surface of the lip portion. The side surface wiping layers consist of a specified deposition density of particles of silica, graphite and the like having a specified particle size distribution and are bonded to the side surface of the lip portion with a silicone rubber composition as in a coating layer of a cured silicone rubber containing the particles, in order not to wear out said coating film on the glass surface. The wiper blade is produced by compression molding and further steps, which is an expensive production method for mass produced articles in contrast to extrusion of rubber profiles.

GB760378 discloses a wiper blade having a shallow concave wiping end which meets two parallel side walls to form sharp wiping edges. The sharp edges directly contact a windshield and determine wear out of the wiper blade.

There are alternative injection moulded wiper blades for windscreen wipers containing two different qualities of rubber in one and the same blade. The wiper blade has a back of synthetic rubber for a silent function without sound having a spring ledge placed inside to get a more uniform pressure distribution, and having an extra hard lip of natural rubber against the windscreen for efficiently cleaning it. The drawback of this type of wiper blades is that they are expensive to produce without being specific durable.

One on the market recently launched wiper blade is made of injection moulded polytetrafluoro ethylene, a material with a very low friction and which due to its stiffness allows a good cleaning. A disadvantage is that polytetrafluoro ethylene is not durable and is also a very expensive material.

### Summary of the Invention

An object of the present invention is to remedy the drawbacks above and to provide a wiper blade made of rubber having a minimal friction against the windscreen, which has a high wear resistance and which efficiently cleans the windscreen, and a method for the manufacturing thereof, allowing a continuous manufacturing at a low cost.

A more specific object of the present invention is to manufacture a wiper blade with an edge for abutment against the windscreen by extruding a rubber profile, which during extrusion is coated on both sides by a polymeric layer. The consisting of ultra high molecular polyethylene polymeric layers are integrated with the rubber during the extrusion, and the rubber profile, coated by polymeric layers, is then cured in a heating stove, whereupon the rubber profile is compressed in the transversal direction and is divided along a longitudinal axis. A concave surface arises in the cut, when the compression ceases, which on both sides has a polymeric layer having a sharp edge. After cutting the rubber profile provided with the polymeric layers into individual lengths, the obtained wiper blade is mounted into a clamp or an yoke and is fastened for example on a vehicle, with the edges on both sides of the concave surface abutting the wind screen. The sharp polymeric edges allows a careful cleaning of the wind screen without noise or squeaking due to the low friction of the material against the wind screen, simultaneously the wiper blade has an elasticity because of the rubber core.

Other objectives, features and advantages of the present invention will appear from the following detailed description, the enclosed drawings and the claims.

### Brief Description of the Drawings

The invention will be disclosed in detail below, reference being made to the accompanying drawings, in which
FIG 1 shows a schematic perspective view of an extruded rubber profile provided with polymeric layers on both sides according to the invention,
FIG 2 shows a schematic side view of a wiper blade for a windscreen wiper according the invention,
FIG 3 shows a schematic side view of an arrangement for manufacturing a wiper blade according to the invention,
Fig 4 shows a side view of a profile of a wiper blade according to an alternate embodiment of the invention, and
FIG 5 shows a side view of an extruded rubber profile according to the embodiment in FIG 4 before the longitudinal division of the rubber profile.

### Description of the Invention

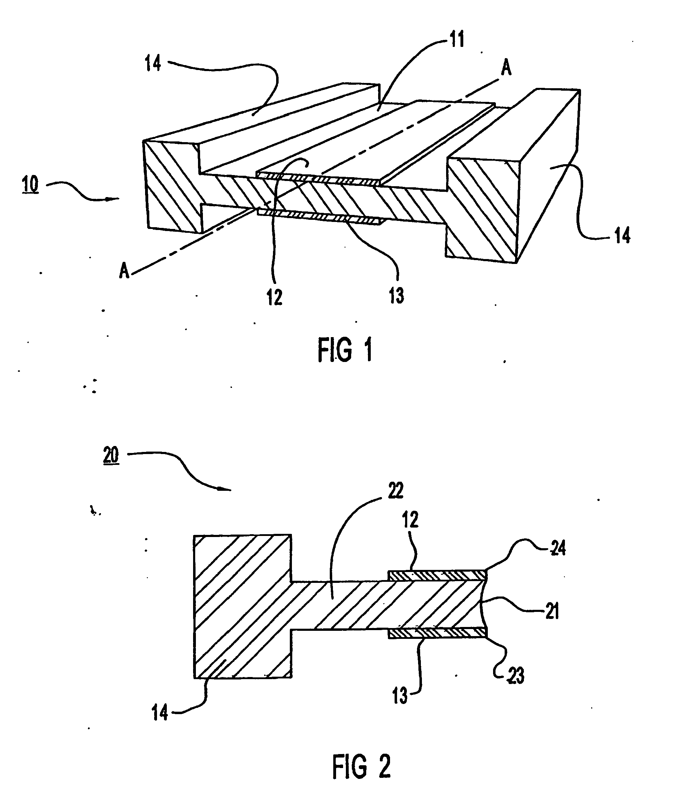

The extruded rubber profile 10, as shown in FIG 1, comprises a middle portion 11 that on its upper side and on its lower side has a thin polymeric layer 12 and 13, respectively, and has two outer portions 14, which each is adapted to be arranged into a not shown clamp or yoke. The material of the rubber profile 10 may for example be ethylene propylene rubber, which is ageing resistant and non-expensive material.

The rubber profile 10 is symmetrical around an axis A-A along which the rubber profile may be divided into two identical units 20, but it may also be unsymmetrical in respect to this division line. The unit 20 has a first portion 22, which is terminated in a concave surface 21 at one side and changes into a second portion 14 at the other side. The concave surface 21 is surrounded by polymer layers 23, 24 on both sides, which form sharp edges.

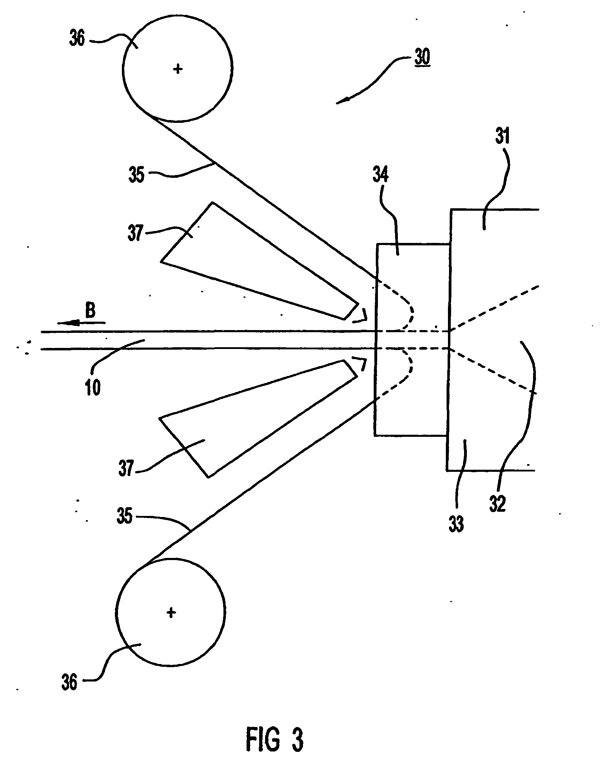

The method for manufacturing wiper blades according to the invention will now be described in detail. FIG 3 shows an arrangement 30 for manufacturing a wiper blade according to the invention. In a first step, the rubber profile 10 is extruded by means of an extruder, the rubber 32 being passed from a head 33 of the extruder into a tool 34 giving the rubber profile 10 a specific shape, performed in a well known way for those skilled in the art. When the rubber profile 10 passes this tool 34 a polymeric foil 35, which is supplied into the tool 34 from a roll 36, is applied on the upper surface and on the lower surface, respectively, of the middle portion 11. The middle portion 11 of the rubber profile has a thickness of about 0.8-1mm, and the foils have a thickness of about 0.1mm. The foil coating is continuously made during the extrusion and with additional heat supply from hot air blowers 37 at a proportionately high temperature of about 170°C-180°C to cause the polymeric layers 12 and 13, respectively formed by the foil, to be integrated with the rubber in the middle portion 11. The polymeric material is an ultra high molecular polyethylene, since an ordinary polyethylene is not able to stand up to the required high temperature without melting. This particular polyethylene has a high wear resistance and a very low friction, and for those reasons it is especially suitable in this application. The manufacturing of the rubber profile provided with the polymeric layers 12 and 13, respectively, is performed continuously and the product is gradually fed forward in the direction of the arrow B. In a second step the rubber profile is cured at about 240°C in a well known way in a microwave equipment or a hot air oven, thereafter it is cooled down. In a third step the middle portion 11 is compressed in the transverse direction to about its half thickness and is divided along the longitudinal axis A-A, the two rubber profiles 20 being obtained. The rubber profile 20 strives to resume its shape when the compression ceases, and the concave surface 21 arises when the rubber in the portion 22 due to its elasticity creeps inwardly between the two polymeric layers 12 and 13, which because of their stiffness form well defined, sharp edges. In a fourth step the rubber profiles 20 are cut into appropriate lengths to individual wiper blades. The wiper blade is then arranged in a not shown clamp or yoke, the outer portion 14 being mounted into the clamp. The sharp edges 23, 24 of the polymeric layers on both sides of the concave surface 21 will abut against the windscreen and will efficiently clean the windscreen from dirt and precipitation. The wiper blade functions in a reciprocating way, similar to a brush movement; one of the polymeric edges of the wiper blade initially sweeps over the windscreen, then the other polymeric edge of the same wiper blade takes over - when the windscreen wiper changes direction - and continues the movement back to the original position.

An important advantage of the wiper blade according the invention is that it functions soundless since the friction against the windscreen is very low. Another advantage of the invention is that the continuous manufacturing of wiper blades by extrusion is very cost efficient and hence provides less expensive products in comparison with such products that are injection moulded. A further advantage is the high wear resistance due to the combination of ethylene propylene rubber and ultra high molecular polyethylene, which also provide a very good function regarding cleaning and which also during wintertime imply that the wiper blade will not freeze to the windscreen.

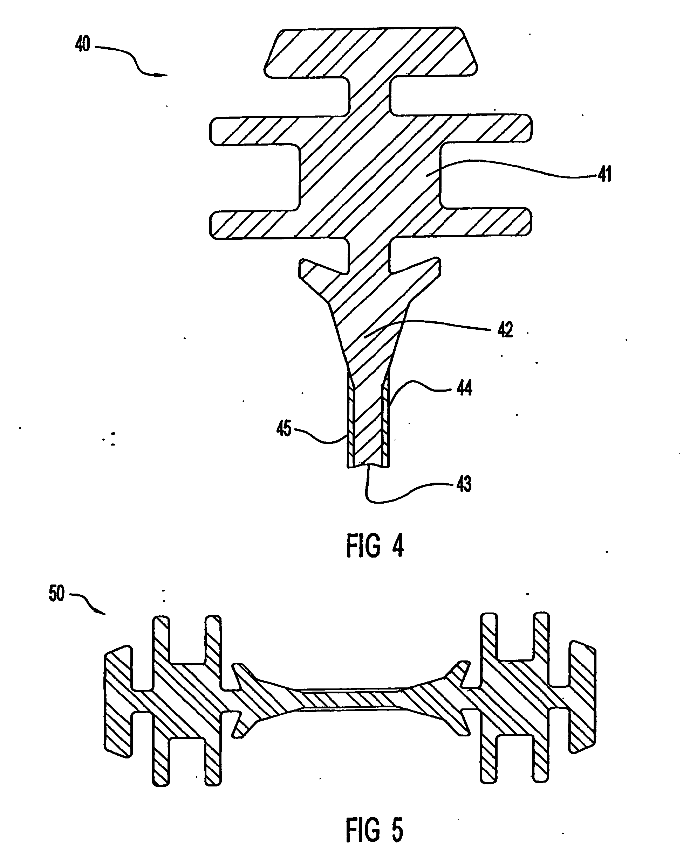

FIG 4 shows an alternate embodiment of a unit, which should be compared to the unit 20 and which comprises a second portion 41 having a totally different appearance than the other portion 14. Analogous to what has been described above, the unit 40 is one of two identical units that are formed after division of an extruded rubber profile 50 according FIG 5. A first portion 42 of the unit 40 has also another appearance than the first portion 21 of the unit 20, but is terminated at one end by a concave surface 43, which at both sides is surrounded by sharp edges from the polymeric layers 44, 45.

The present invention has been described as an example with reference to preferred embodiments according to FIG 1 and FIG 2, and FIG 3 and FIG 4, respectively, without being limited to these embodiments. Alternate embodiments than the above described may exist within the scope of the enclosed claims, as are easily realised by those skilled in the art. The appearance of the rubber profile may for example vary depending on its attaching in the clamp of the windscreen. The rubber profile can for example be shaped as a ball regarding the second portion 14 in applications where the requirements of the attaching are not so high, e.g. a wiper blade in an ordinary window scraper.

## Claims

1. A wiper blade of rubber for cleaning a pane, for example a windscreen or the like, comprising a rubber profile (10, 20, 40, 50),
wherein the rubber profile has an edge configured to abut the pane, and
wherein the rubber profile (10, 20, 40, 50) along the edge forms a concave edge surface (21, 43),
wherein the rubber profile (10, 20, 40, 50) on both sides of the edge is coated by a polymeric layer (12, 13, 44, 45), **characterised in that** said polymeric layer consists of ultra high molecular polyethylene, and
wherein the rubber profile (10, 20, 40, 50) along the edge forms the concave edge surface (21, 43) between the on both sides of the rubber profile located polymeric layers (12, 13, 44, 45).

2. A wiper blade according to claim 1, **characterized in that** the polymeric layers (12, 13, 44, 45) form sharp edges on both sides of the concave edge surface (21, 43).

3. A method for manufacturing a wiper blade of rubber for cleaning a pane, for example a windscreen or the like, comprising a rubber profile (10, 20, 40, 50) having an edge configured to abut the pane and which on both sides of the edge is coated by a polymeric layer (12, 13, 44, 45), consisting of ultra high molecular polyethylene, and which along the edge forms a concave edge surface (21, 43) between the on both sides of the profile located polymeric layers (12, 13, 44, 45), comprising:
- extruding the rubber profile (10, 20, 40, 50),
- applying the polymeric layers (12, 13, 44, 45 on both sides of the rubber profile (10, 20, 40, 50) during extrusion of the profile for integrating the polymeric layers (12, 13, 44, 45) with the rubber profile (10, 20, 40, 50),
compressing the rubber profile (10, 20, 40, 50) provided with the polymeric layers in the transversal direction of the both sides, and
dividing the compressed rubber profile (10, 20, 40, 50) along a longitudinal axis so that the rubber profile (10, 20, 40, 50) forms the concave surface (21, 43) in the division line, when the compression ceases.

4. A method according to claim 3, **characterized in that** the compression of the rubber profile (10, 20, 40, 50) provided with the polymeric layers is made to half the thickness of the profile (10, 20, 40, 50).

5. A method according to claim 3, **characterized in that** integrating the polymeric layers (12, 13, 44, 45) is performed during heat supply.

6. A method according to any of the claims 3-5, **characterized in that** each of the polymeric layers (12, 13, 44, 45) is applied as a foil (35), when the rubber profile (10, 20, 40, 50) passes through an extrusion tool (34) providing its profile, and that the heat supply is simultaneously done.

7. A method according to any of the claims 3-6, **characterized in that** the thickness of the foil (35) is about 0.1 mm.

8. A method according to any of the claims 3-7, **characterized by** the steps of curing the rubber profile (10, 20, 40, 50) provided with polymeric layers during heat supply and cutting the rubber profile (10, 20, 40, 50) across its width to provide individual wiper blades of a specific length.

## Patentansprüche

1. Wischerblatt aus Gummi zur Reinigung einer Scheibe, beispielsweise einer Windschutzscheibe oder dergleichen, bestehend aus einem Gummiprofil (10, 20, 40, 50),
wobei das Gummiprofil eine Kante aufweist, die so ausgelegt ist, dass sie auf der Scheibe aufliegt, und
wobei das Gummiprofil (10, 20, 40, 50) entlang der Kante eine konkave Kantenoberfläche (21, 43) ausbildet,
wobei das Gummiprofil (10, 20, 40, 50) an beiden Seiten der Kante mit einer polymeren Schicht (12, 13, 44, 45) beschichtet ist, **dadurch gekennzeichnet, dass** die polymere Schicht aus ultrahochmolekularem Polyethylen besteht, und
wobei das Gummiprofil (10, 20, 40, 50) entlang der Kante die konkave Kantenoberfläche (21, 43) zwischen den an beiden Seiten des Gummiprofils angeordneten polymeren Schichten (12, 13, 44, 45) ausbildet.

2. Wischerblatt nach Anspruch 1, **dadurch gekennzeichnet, dass** die polymeren Schichten (12, 13, 44, 45) scharfe Kanten an beiden Seiten der konkaven Kantenoberfläche (21, 43) ausbilden.

3. Verfahren zur Herstellung eines Wischerblattes aus Gummi zur Reinigung einer Scheibe, beispielsweise einer Windschutzscheibe oder dergleichen, bestehend aus einem Gummiprofil (10, 20, 40, 50) mit einer Kante, die so ausgelegt ist, dass sie auf der Scheibe aufliegt und das an beiden Seiten der Kante mit einer polymeren Schicht (12, 13, 44, 45) beschichtet ist, die aus ultrahochmolekularem Polyethylen besteht und bei dem entlang der Kante eine konkave Kantenoberfläche (21, 43) ausgebildet ist, zwischen den an beiden Seiten des Profils angeordneten polymeren Schichten (12, 13, 44, 45), mit den Verfahrensschritten:
- Extrudieren des Gummiprofils (10, 20, 40, 50),
- Aufbringen der polymeren Schichten (12, 13, 44, 45) an beiden Seiten des Gummiprofils (10, 20, 40, 50) während der Extrusion des Profils zur Integration der polymeren Schichten (12, 13, 44, 45) in das Gummiprofil (10, 20, 40, 50),
- Komprimieren des mit den polymeren Schichten versehenen Gummiprofils (10, 20, 40, 50) in transversaler Richtung der beiden Seiten, und
- Trennung des komprimierten Gummiprofils (10, 20, 40, 50) entlang einer Längsachse derart, dass das Gummiprofil (10, 20, 40, 50) die konkave Oberfläche (21, 43) entlang der Trennlinie ausbildet, wenn die Kompression endet.

4. Verfahren nach Anspruch 3, **dadurch gekennzeichnet, dass** die Kompression des mit den polymeren Schichten versehenen Gummiprofils (10, 20, 40, 50) durchgeführt wird, um die Dicke der Profile (10, 20, 40, 50) zu halbieren.

5. Verfahren nach Anspruch 3, **dadurch gekennzeichnet, dass** die Integration der polymeren Schichten (12, 13, 44, 45) während der Wärmezufuhr durchgeführt wird.

6. Verfahren nach einem der Ansprüche 3-5, **dadurch gekennzeichnet, dass** jede der polymeren Schichten (12, 13, 44, 45) als eine Folie (35) aufgebracht wird, wenn das Gummiprofil (10, 20, 40, 50) durch ein Extrusionswerkzeug (34) läuft, wodurch es sein Profil erhält, und dass die Wärmezufuhr gleichzeitig stattfindet.

7. Verfahren nach einem der Ansprüche 3-6, **dadurch gekennzeichnet, dass** die Dicke der Folie (35) etwa 0,1 mm beträgt.

8. Verfahren nach einem der Ansprüche 3-7, **gekennzeichnet durch** die Schritte der Vulkanisation des Gummiprofils (10, 20, 40, 50), das während der Wärmezufuhr mit polymeren Schichten versehen wird und Schneiden des Gummiprofils (10, 20, 40, 50) in Querrichtung, um einzelne Wischerblätter mit einer bestimmten Länge zu erhalten.

## Revendications

1. Balai d'essuie-glace en caoutchouc pour nettoyer une vitre, par exemple un pare-brise ou similaire comprenant un profiléé en caoutchouc (10, 20, 40, 50),
dans lequel le profiléé en caoutchouc a un bord configuré pour venir en butée contre la vitre, et
dans lequel le profiléé en caoutchouc (10, 20, 40, 50) le long du bord, forme une surface de bord concave (21, 43),
dans lequel le profilé en caoutchouc (10, 20, 40, 50) des deux côtés du bord, est recouvert par une couche polymère (12, 13, 44, 45), **caractérisé en ce que** ladite couche polymère se compose de polyéthylène à poids moléculaire ultra élevé, et
dans lequel le profilé en caoutchouc (10, 20, 40, 50) le long du bord, forme la surface de bord concave (21, 43) entre les couches polymères (12, 13, 44, 45) situées des deux côtés du profilé en caoutchouc.

2. Balai d'essuie-glace selon la revendication 1, **caractérisé en ce que** les couches polymères (12, 13, 44, 45) forment des bords saillants des deux côtés de la surface de bord concave (21, 43).

3. Procédé pour fabriquer un balai d'essuie-glace en caoutchouc pour nettoyer une vitre, par exemple un pare-brise ou similaire, comprenant un profilé en caoutchouc (10, 20, 40, 50) ayant un bord configuré pour venir en butée contre la vitre et qui, des deux côtés du bord, est recouvert par une couche polymère (12, 13, 44, 45) se composant de polyéthylène à poids moléculaire ultra élevé et qui, le long du bord, forme une surface de bord concave (21, 43) entre les couches polymères (12, 13, 44, 45) situées des deux côtés du profilé, comprenant les étapes consistant à :
extruder le profilé en caoutchouc (10, 20, 40, 50),
appliquer les couches polymères (12, 13, 44, 45) des deux côtés du profilé en caoutchouc (10, 20, 40, 50) pendant l'extrusion du profilé pour intégrer les couches polymères (12, 13, 44, 45) avec le profilé en caoutchouc (10, 20, 40, 50),
comprimer le profilé en caoutchouc (10, 20, 40, 50) prévu avec les couches polymères dans la direction transversale des deux côtés, et
diviser le profilé en caoutchouc (10, 20, 40, 50) comprimé le long d'un axe longitudinal de sorte que le profilé en caoutchouc (10, 20, 40, 50) forme la surface concave (21, 43) dans la ligne médiane, lorsque la compression cesse.

4. Procédé selon la revendication 3, **caractérisé en ce que** la compression du profilé en caoutchouc (10, 20, 40, 50) pourvu des couches polymères, est réalisée sur la moitié de l'épaisseur du profilé (10, 20, 40, 50).

5. Procédé selon la revendication 3, **caractérisé en ce que** l'étape consistant à intégrer les couches polymères (12, 13, 14, 15) est réalisée pendant l'alimentation de chaleur.

6. Procédé selon l'une quelconque des revendications 3 à 5, **caractérisé en ce que** chacune des couches polymères (12, 13, 44, 45) est appliquée comme une feuille (35), lorsque le profilé en caoutchouc (10, 20, 40, 50) passe par un outil d'extrusion (34) fournissant son profilé, et que l'alimentation de chaleur est réalisée simultanément.

7. Procédé selon l'une quelconque des revendications 3 à 6, **caractérisé en ce que** l'épaisseur de la feuille (35) est d'environ 0,1 mm.

8. Procédé selon l'une quelconque des revendications 3 à 7, **caractérisé en ce qu'**il comprend les étapes consistant à faire durcir le profilé en caoutchouc (10, 20, 40, 50) prévu avec les couches polymères pendant l'alimentation de chaleur et couper le profilé en caoutchouc ( 10, 20, 40, 50) sur sa largeur pour proposer des balais d'essuie-glace individuels une longueur spécifique.
